# EUROPEAN PATENT APPLICATION

(11) **EP 4 640 750 A1**
(43) Date of publication of application: **29.10.2025**
(21) Application number: 24172439.2
(22) Date of filing: 25.04.2024
(51) Int. Cl.: C08J 3/205, C08J 3/22

(54) **COMPOSITE MATERIALS FROM MATRIX POLYMERS AND BIOCHAR AND METHODS FOR THEIR PRODUCTION**

(71) Applicant: Made of Air GmbH, 12053 Berlin (DE)
(72) Inventor: The designation of the inventor has not yet been filed
(74) Representative: Banse & Steglich Patentanwälte PartmbB

(57) **Abstract**

The invention relates to a method for preparing a composite material, comprising the steps of (a) providing a composition which comprises a matrix polymer and a granulate which was obtained by wet granulation from biochar particles and at least one binder polymer, (b) moulding the composition, and (c) consolidating the moulded composition. The invention also relates to the composite materials, shaped objects, granulates and production methods.

## Description

The invention relates to composite materials from matrix polymers and biochar and methods for their production. The invention also relates to shaped objects and granulates for producing the composite materials.

### State of the art

Various approaches are presently suggested and investigated for controlling the carbon dioxide content in the atmosphere. An especially effective approach is carbon (dioxide) sequestration and long-term storage in functional materials. It is desirable that such functional materials can be produced easily and conveniently, that they are of practical use, and that they can store high amounts of carbon. In this regard, construction and building materials are of special interest. Construction materials are used in high amounts, and the construction sector is responsible for a large share of total worldwide carbon dioxide release. Construction materials have the potential to store large quantities of carbon over long time periods.

Biochar is the lightweight black residue, made of carbon and ashes, which is obtained by pyrolysis of biomass. Pyrolysis is partial thermal degradation in an oxygen-controlled atmosphere. Biochar is widely used as a combustible and in agriculture to reduce runoff and increase soil fertility and crop yields. Since biochar consists mostly of carbon from the atmosphere, it is also a potentially interesting material for carbon sequestration and storage. Compared to other carbon storing organics such as carbohydrates, biochar displays a high recalcitrance, which prevents decomposition and re-entry of stored carbon into the atmosphere. As demonstrated by a growing body of data, biochar can remain stable under normal environmental conditions for hundreds of years.

Biomass from wood waste is one of the most abundant, cost-competitive, and sustainable biomass resources. An enormous amount of waste residue is generated in the process of making products such as lumber, furniture, pallets, and paper, where often less than 50 percent of the tree ends up in a final product. The remainder of this material is generally incinerated or landfilled, making it a highly cost-effective raw material, and an efficient source of biogenic carbon to produce biochar from.

It has been proposed in the art to store carbon in composite materials from polymer materials and carbon-based fillers. If such composites could be provided for construction applications, carbon could be stored in large amounts for long time periods. Various composite materials have been described in the art in which biochar fillers are incorporated into polymer materials. A summary is provided in Das et al., 2021. Composites prepared by extrusion and moulding compositions comprising polyethylene and biochar filler are described in Zhang et al., 2017. However, such composites and the methods for their production have many drawbacks, which are presently limiting widespread commercial use.

It is a general problem that biochar powder is difficult to handle and process. For uniform compounding with polymers, biochar powder from particles in the lower micrometer range is required, which exhibits excessive dusting. The dusting causes safety hazards for the user, and can pollute and even damage the machinery and devices for processing and compounding. The low density of dusty biochar particles makes handling even more difficult and prevents rapid processing.

The compounding of polymers with biochar filer is also problematic because of the high intrinsic hydrophilicity of biochar, which can lead to water absorption during the preparation of biochar, but also during storing and processing. Polymers are generally compounded at high temperature. When compounded with biochar at hot temperature, the absorbed water is released and can incur hydrolytic degradation of the polymer. This is especially a problem when the polymer is susceptible to hydrolysis, such as polyamide, polyethylene terephthalate or polycarbonate. The water release of biochar can also lead to respective problems with various conventional additives such as polyvinyl alcohol or sodium silicate.

The compounding of polymers with biochar is also difficult, because the compatibility of biochar with matrix polymers is often low. Thus, it is generally difficult to provide uniform moulding compositions based on biochar and polymers. It is often not possible to prepare a uniform and stable composite material which comprises high amounts of biochar. If higher amounts of biochar are included, such composites tend to become brittle and fracture easily.

Peng et al., 2021, relates to pellets based on biochar and polymers such as polyethylene, PET, lignin or starch. The pellets are prepared by mixing and compressing the components. The biochar pellets are used as fuels. The document does not relate to composites, such as construction materials, which require sufficient stability for permanent storage of carbon.

For improving the stability of such polymer composites, it has been suggested in the art to modify the surface of carbon-based fillers with coupling agents. For example, Pongdong et al., 2015, discloses a composite material based on epoxidized natural rubber and rice husk ash filler, which is modified with a silane coupling agent. The coupling agent comprises sulfur and supports a vulcanization reaction. However, the method and composite have various drawbacks. Curing systems based on epoxidized rubber compounds and coupling agents are rather complicated and costly. It is a problem that vulcanized rubbers are rather elastic and have limited thermal stability. It is not suggested to use the composite for permanent carbon storage or in construction applications.

Biochar is also used in the art for wastewater purification, because of its absorptive properties, and soil enrichment. For such applications, the raw biochar powder can be converted with a binder into a form which can be handled and used more conveniently, such as grains or pellets. However, such products have low stability and are not suitable for long-term storage of carbon, since it is generally desirable for such applications that the biochar becomes accessible, and thus the products become disintegrated during use.

For example, Briens and Bowdon-Green, 2020, relates to biochar granulates from biochar and hydroxypropyl-methyl cellulose, molasses or ammonium nitrate, which can be applied to soil for soil amendment.

Yang et al., 2017, investigate the role of organic matter on nitrogen fixation by biochar upon addition to soil. In order to simulate natural organic matter, biochar particles are coated with dilute tannic acid. The authors conclude that nitrate sorption of biochar is decreased after interaction with natural organic matter.

CN1 12473622 A relates to a modified biochar for purification of wastewater. The biochar is pyrolyzed, reacted with a solution of nitric acid and tannic acid, and dried.

US 2021/0163745A1 relates to polymer composites with a polymer matrix from melt-flowable lignin. The lignin material has thermoplastic properties and can be extruded into solid objects. It is found that an adsorptive biochar filler can reduce undesirable stickiness and odor of the composite.

There is a continuous need for improved and efficient materials and methods, which overcome the problems of the prior art as outlined above.

### Problem underlying the invention

The problem underlying the invention is to provide materials and methods, which overcome the problems of the prior art as outlined above.

The problem underlying the present invention is to provide materials and methods for permanently storing large amounts of carbon which has been sequestered from the atmosphere. The materials should be suitable for large scale applications, such as construction and building applications. The materials should have high stability, especially mechanical stability, even when comprising high levels of biochar. Preferably, the materials should have high density for efficient carbon storage, and low water uptake for high stability.

Further, the materials should be easily available from conventional raw materials at low costs. They should be available by convenient and simple procedures, which do not incur safety problems during handling and processing. Overall, the materials and methods should be suitable for mass production.

### Disclosure of the invention

Surprisingly, it was found that the problem underlying the invention is overcome by methods, composite materials, shaped objects and granulates according to the claims. Further embodiments of the invention are outlined throughout the description.

Subject of the invention is a method for preparing a composite material, comprising the steps of
(a) providing a composition which comprises a matrix polymer and a granulate which was obtained by wet granulation from biochar particles and at least one binder polymer,
(b) moulding the composition, and
(c) consolidating the moulded composition.

The method is for providing a composite material. In the composite material, the matrix polymer forms a matrix in which biochar particles are distributed. Thus, the biochar functions as a filler. Preferably, the polymer matrix is continuous.

The composite material is prepared by moulding. Thus, the composite material obtained in the process has a defined form. The product is a defined three-dimensional object (shaped body, shaped part). The form is deliberately conferred to the object during moulding. The form is not random. As used herein, the term "moulding" refers to all processing methods in which a shape is conferred to polymer compounds, such as compression moulding, injection moulding, extrusion moulding, blow moulding, thermoforming and rotational moulding.

In step (a), a composition is provided which comprises a matrix polymer and a granulate. Typically, the components are intimately blended. For example, it can be a mixture of solid particles, a melt or paste.

It is preferred that the granules are disintegrated at least in part during the method. Preferably, the granules are fully disintegrated. It is preferred that the granules are not detectable any more in the composite material. This is advantageous, because the polymer composite is uniform and can have high stability. In these embodiments, the binder polymer can remain attached to the surface of biochar particles and/or can become dispersed in the polymer matrix. Accordingly, the granulate is an intermediate product, which facilitates handling and processing of the biochar. The binder polymer becomes integrated into the polymer matrix. Thus, the composite material is different from composite materials in the art, in which biochar is simply compounded with a matrix polymer.

The granulate has been prepared by wet granulation. This a process in which primary powder particles, in the present case biochar particles, are made to adhere to form larger, multiparticle entities called granules. Each granule comprises a plurality of biochar particles, which are adhered to each other by the polymer binder. Wet granulation is carried out in the presence of solvent. When the biochar particles are contacted with the binder polymer in the presence of solvent, the surface of the biochar particles becomes coated with the binder polymer at least in part. This has the effect that the biochar particles adhere to each other. During or after granulation, the granulate is dried until the granules have desired physical properties, such as good flowability and low stickiness. For environmental and cost reasons, it is preferred that the solvent is water. Preferably, water is the only solvent in the binder.

Biochar is a lightweight carbon-based material which is produced by pyrolysis of biomass, such as wood or other plant material. Pyrolysis is partial thermal degradation of the biomass in an oxygen-controlled atmosphere. The biochar can be grinded or milled into fine powder. Preferably, the biochar is from wood. Biochar is characterized by its high C-14 isotope level, which distinguishes it clearly from coal of fossil origin, reaction products and derivatives thereof. Only biochar storage can sequester carbon from the atmosphere. The use of biochar in the inventive method is advantageous for environmental reasons, because a large quantity of carbon can be stored permanently in the composite material. An amount of 1 kg biochar contains approximately 680 to 820 g carbon, which is equivalent to about 2.5 to 3 kg carbon dioxide. When biochar is permanently stored in the composite material, the atmosphere can be depleted permanently from an equivalent amount of carbon dioxide. This can have a relevant environmental impact if the biochar-based materials are used for large-scale applications, such as construction.

In a preferred embodiment, the biochar particles are relatively fine. Preferably, the average particle size is 1 µm to 500 µm, more preferably 5 µm to 150 µm. In a preferred embodiment, the biochar particles have particle sizes in the range of 1 µm to 500 µm, preferably between 5 µm to 100 µm. Preferably, the maximum particle size is smaller than 100 µm, or smaller than 67 µm. For example, such a composition can be obtained by sieving. Particle sizes can be determined according to DIN ISO 2591-1:1988. It was found that biochar having small particle sizes can be efficiently processed into granules with the binder polymer, and integrated in high amounts into the composite materials with matrix polymers.

The granules comprise at least one binder polymer, which binds the biochar particles in the granule together. According to the invention, it was found that the granulate can have especially advantageous properties when the binder is a polymer. Granulates from biochar and binder polymers can exhibit low dusting and high flowability. The granulate can be handled conveniently when preparing the composite material.

Surprisingly, it was also found that the composite materials of the invention, which are prepared from such granulates, can have advantageous properties, especially high mechanical and dimensional stability. Thus, the use of the granulate does not only improve handling and processing, but can also provide improved composite materials.

The granulate was obtained by wet granulation from biochar particles and at least one binder polymer. The binder polymer can be added to the granulation process in polymerous form, or can be formed during the granulation process from precursor molecules, for example in a crosslinking and/or condensation reaction, typically at elevated temperature.

In a preferred embodiment, the binder polymer is from natural origin; and thus not from fossil origin. The term "natural origin" means that the binder polymer can be a compound which is isolated from a natural source, or can be based on such a compound from natural source, which is modified. Preferably, the natural source is plants. Preferably, the structure of the polymer scaffold is maintained during modification. Preferably, all the carbon atoms in the binder, or at least of the polymer main chain, are from natural origin. As known in the art, if a polymer is from natural origin can be determined by radiocarbon dating, in which the level of carbon-14 is determined.

When both the biochar and binder polymer are from biomass, the carbon footprint of the biochar granules and composite material can be improved. Preferably, substantially all solid components of the granules, preferably at least > 95% or > 99 % by weight, more preferably 100%, are from natural origin and/or biomass. Unless stated otherwise, all percentages herein are by weight.

Preferably, the biochar and/or binder polymer are from waste biomass. This is biomass which would otherwise be discarded or burnt, such as residues from wood processing, forestry, or gardening. This is advantageous, because the environmental footprint of the composite material can be further improved.

Preferably, the binder polymer as such is isolated from a natural source. For example, such binder polymers are cellulose, lignin or starch. In another embodiment, the binder polymer was polymerized from monomers from natural origin. In this embodiment, either the monomers or precursor compounds for producing the monomers can be from natural origin. For example, the binder polymer can be polyfurfuryl alcohol, which is prepared from furfuryl alcohol and maleic anhydride from natural origin. Also polyvinyl alcohol can be prepared from building blocks from natural origin.

In an embodiment, the binder polymer is a polysaccharide. Preferably, the polysaccharide is starch, cellulose or a derivative thereof, such as carboxymethyl cellulose (CMC).

In a preferred embodiment, in binder polymer comprises aryl groups, i.e. comprises aromatic rings, typically hydrocarbon rings. In this embodiment, the binder polymer is an aromatic compound. Preferably, the polymer comprises C-5 and/or C-6 aromatic rings. Preferably, the aromatic binder polymer is polyfurfuryl alcohol, lignin, tannin, a polymer based on furfural, or derivates thereof, such as a lignosulfonate or Kraft lignin. It was found that binder polymers comprising aryl groups can have especially high affinity for biochar. Without being bound to theory, the biochar surface, which comprises aromatic ring systems, may have affinity to such aryl binder polymers. Such reversible interactions can be broken up during compounding, such that a uniform composite can be obtained.

In a preferred embodiment, the binder polymer is cured when the moulded composition is consolidated in step (c). Curing includes a chemical reaction, in which polymer molecules form intermolecular and/or intramolecular covalent bonds. Thereby, a continuous polymer matrix is formed, in which the biochar particles are distributed. Curing can be advantageous, because the mechanical stability of the composite material can be improved. During curing, also covalent bonds between the biochar surface and the binder polymer can be formed, which can further increase the overall strength of the composite material. In this embodiment, the binder polymer is cured at least partially during consolidation of the composite material in step (c). However, a certain degree of pre-curing can already have occurred before step (c), for example when the granulate was prepared and/or dried. A certain degree of pre-curing can be advantageous for preparing and handling the granulate.

Preferably, the curing reaction is a condensation reaction. In typical condensation reactions, for example from polymers based on furfuryl alcohol, furfural based binder, or tannin, intermolecular and intramolecular bonds are formed between polymer molecules. A condensation reaction can be advantageous, because no cross-linking agent is required. Moreover, water formed in the condensation reaction can be adsorbed by the biochar particles, and thus is prevented from hydrolyzing the matrix polymer. Preferably, in step (c) the moulded composition is heated. The heating can support curing and consolidation.

In a preferred embodiment, the binder polymer comprises aryl groups and is curable. Preferably, the binder polymer is selected from polyfurfuryl alcohol, furfural based binders and tannin. In this embodiment, especially strong polymer composites can be obtained.

In an especially preferred embodiment, the binder polymer is polyfurfuryl alcohol. Surprisingly, it was found that granulates and composite materials based on polyfurfuryl alcohol binder have advantageous properties. The granules have very low water uptake. They can be stored conveniently and for long time periods without undesirable accumulation of water. Moreover, composite materials from biochar and polyfurfuryl alcohol binder were found to have high tensile strength and elastic modulus. Such composite materials are especially suitable for applications in which high stability is required, such as construction.

In a preferred embodiment, the binder polymer is not crosslinked with a crosslinker, especially not in steps (a) to (c). This is advantageous, because the method and system are relatively simple, as there is no need for controlling a crosslinking reaction by adjusting the reactants and conditions. However, the binder polymer can be prepared in a preceding crosslinking reaction, before it is granulated with the biochar.

In a preferred embodiment, the granules have an average diameter of 200 µm to 5 mm, preferably between 500 µm and 2 mm. In a preferred embodiment, the granules have diameters in the range of 200 µm to 10 mm, preferably 200 µm to 5 mm, especially between 0.5 mm and 2 mm. The diameter can be determined by Dynamic Image Analysis according to ISO 13322-2. Granules having such dimensions are especially suitable for compounding with matrix polymers for preparing moulded composite materials.

The amount of biochar in the granules can be adjusted to a desired level. For example, the granules may comprise at least 20 wt.% biochar or at least 50 wt.% biochar, or 20 to 99 wt.% biochar, based on all solid components.

However, a high biochar content can be advantageous for storing a high amount of carbon. Preferably, the granules comprise >70 wt.% biochar, or >80 wt.% biochar, based on all solid components. In a preferred embodiment, the granules comprise 70 to 98 wt.% biochar. In a preferred embodiment, the granulate comprises, based on the total amount of solids,
(i) 60 to 99 wt.%, preferably 80 to 98 wt.%, biochar, and
(ii) 1 to 40 wt.%, preferably 2 to 20 wt.%, binder polymer.

The granulate may comprise functional additives, for example up to 15 wt.%, or up to 5 wt.%. Preferably, the total amount of components (i), (ii) and additives is 100%.

In a preferred embodiment, the biochar and binder polymer are the only structural components of the granules. In another embodiment, the binder comprises additional structural components. For example, the granules may comprise an additional filler, for example an inorganic filler.

Wet granulation is carried out from a granulation composition the presence of a liquid, preferably water. The use of water is advantageous for environmental reasons, but also because water can be easily removed by heating, and can be absorbed in part by the biochar particles. For wet granulation, the binder polymer can be provided in a liquid binder composition, typically a suspension or solution. The binder composition may comprise between 1 to 50 wt.%, or between 2% to 25 wt.% of the binder polymer. If required, further liquid can be added during wet granulation, for example by spraying. In general, it is preferred that the ratio of solvent in the aqueous binder is not to high, such that it can be removed efficiently during the granulation.

The granulation composition may comprise one or more additives. Preferably, one or more functional additives are included for modifying the properties of the granulate, or for facilitating processing, such as compounding with the polymer, or for modifying the properties of the moulding composition or shaped part. For example, the additive can be an adhesion promoter, anti-foaming agent, wetting agent, UV stabilizer, colorant, flame retardant, pH adjusting agent, curing agent, catalyst or processing aid. In a specific embodiment, the additives are not polymers.

In a preferred embodiment, the binder composition comprises impurities. Binder polymers from natural origin are often provided at low purity for industrial applications. For example, the binder polymer may comprise up to 5%, up to 10% or even up to 20% impurities. The use of such relatively crude polymer binders can be advantageous, because they can have a relatively good environmental footprint if little energy was used for refinement.

In a preferred embodiment, the granulate is used as a master batch. This means that a granulate has defined properties, for example regarding ratio of biochar to polymer binder, granule size and/or water content. Such a master batch is suitable for compounding with various matrix polymers. Especially if its water adsorption is low, the master batch granulate can be stored, handled and processed conveniently. Based on the master batch granulate, the user can prepare composite materials, without undesirable variations of the production process and properties.

In a preferred embodiment, the binder polymer in the granulate is in a partially cured state. In this embodiment, the binder polymer is cured in two stages. In the first stage, the binder polymer is partially cured during granulation, and if present reacts with the curing agent. In the second stage, the reaction is completed during consolidation of the moulded composition. Preferably, the polymer matrix of the composite material is fully cured. Partial curing of the granulate is advantageous, because it can provide a desired degree of stability to the granules. When the moulded object is consolidated, the stability can be increased by curing the residual reactive sites. The degree of curing can be controlled by adjusting the process conditions such as temperature and reaction time, initially for granulation, and later for moulding and consolidation of the polymer composition. Optionally, the binder composition comprises at least one further compound, which can react with the binder polymer or a precursor of the binder polymer, for example in a condensation reaction.

When applying a two-stage curing process, the biochar properties can be customized for a desired application. The biochar, which is otherwise difficult to handle and process, can be provided in a form which is advantageous for further use. By partial curing of the granules, the binding strength can be adjusted, such that the granules can be processed and disintegrated conveniently when compounded with the matrix polymer. This can be advantageous when dispersing the biochar in the polymer matrix with conventional machinery at high shear force, such as a twin-screw extruder.

In another embodiment, the binder polymer is curable, but is not partially cured in the granulate. In this embodiment, the binder polymer is not cured during granulation. The curing occurs during consolidation of the moulded composition. The curing can be induced by additives in the moulding composition, such as a curing agent or catalyst. This can be advantageous, because the granulate can be disintegrated more easily in the moulding composition, and no control of partial curing is required.

Preferably, the granules have low moisture uptake. Preferably, the moisture uptake of the granules after 72 hours is less than 5%, more preferably less than 2.5% or even less than 1%, when determined at 23°C and 65% RH (relative humidity). This can be advantageous for handling and processing the granulate, but also for obtaining a stable composite material.

Subject of the invention is also a granulate, which is obtainable by wet granulation of an aqueous composition comprising biochar powder and a binder polymer comprising aryl groups. The structure, components and properties of this granulate can be adjusted and selected as outlined above regarding the inventive method. Preferably, the binder polymer is polyfurfuryl alcohol or lignin.

Subject of the invention is also a method for preparing a granulate, comprising the steps of
(i.) providing an aqueous composition comprising biochar particles and a binder polymer comprising aryl groups,
(ii.) wet granulating the composition, and
(iii.) drying the granulate.

The granulate is prepared by wet granulation. This is advantageous, because the resulting granules can become flowable and can be handled conveniently, for example by pouring. When biochar particles are agitated in the presence of the binder polymer and water, agglomerates are formed in which biochar particles adhere to each other. Granulation can be carried out with conventional methods and devices. For example, methods for preparing granulates from biochar and binders by drum granulation are described in Briens and Bowdon-Green, 2020. Granules obtained by wet granulation are agglomerates, which have a relatively loose structure. The granules are not compressed into a form. The size and structure of the granules can be adjusted by the process conditions, such as water content, agglomeration time and temperature, drying time and temperature, and agitation means. The biochar particles can adhere to each other in the granules rather loosely. Thus, the granules can disassemble at least partially during compounding, and biochar particles or smaller aggregates can be mixed intimately with the matrix polymer. In a preferred embodiment, granulation is carried out at elevated temperature, for example between 60°C and 120°C, preferably between 80°C and 100°C. This can be advantageous for the granulation process, but also for supporting partial curing of the binder.

Granulates from wet granulation are different from other particular matter, such as pellets or granulates obtained by grinding solid materials. Granules from wet granulation are loosely assembled, agglomerated biochar particles. Their shape is irregular and roughly spherical. The granules have relatively low density and can be porous. Typically, they can be disintegrated during compounding relatively easily. In contrast, granules from grinded solid materials are rather dense, whilst the structure is characterized by sharp edges. They have the same density as their precursor material, and the particles cannot be disintegrated conveniently.

In step (a), a moulding composition is provided, which comprises the matrix polymer and granulate. The matrix polymer is typically a plastic material. The biochar and the matrix polymer are compounded. Compounding is a process in which a filler, in the present case biochar, is intimately mixed with a plastic matrix material. The moulding composition can be mixed with conventional means, for example a static mixer or extruder. The moulding composition is typically molten, such that it becomes a liquid or paste. The desired viscosity can be adjusted by heating and/or additives. The moulding composition in step (a) is preferably solvent-free. This means that only residual solvent is present, especially water bound in the biochar. Typically, no solvent is added to the moulding composition before moulding.

In step (b), the composition is moulded. The composition can be filled into the moulding form (the mould) and subjected to heat and pressure. Alternatively, the moulding composition can be extruded or compressed. Preferably, the temperature for compounding and/or moulding is between 120°C and 200°C, specifically between 140°C and 180°C. Thereby, a moulded composition is obtained. The shape can be conferred to the composite material by the moulding form. The moulded composition is removed from the mould before or after consolidation. Devices and methods for compounding and moulding polymers are commercially available and well known in the art.

In step (c), the moulded part is consolidated and becomes the composite material. Since the composite material is a shaped object. The form of the shaped object can correspond to a moulding form used in the process.

Consolidation means that the moulded composition attains a stable structure. The moulded composition can be dried and/or cured. Preferably, the moulded part is cured, which means that covalent bonds are formed. Curing is preferably supported by heating to a temperature as specified above for moulding. By heating for an appropriate time, the binder polymer, which may already be cured partially, can be fully cured. The shaped part should be cured completely to attain the maximum stability. Preferably, the consolidation temperature is between 120°C and 200°C, specifically between 140°C and 180°C.

The biochar functions as a filler in the composite material. At least in part, the binder polymer can remain on the surface of the biochar particles, thereby enhancing compatibility of the matrix polymer with the biochar. A shaped object is obtainable which has a defined shape, high mechanical stability, and a high content of biochar filler which is evenly dispersed in the composite material.

In principle, any matrix polymer can be used in the process which can be compounded and moulded. The matrix polymer is preferably an organic polymer. Preferably, it is a plastic material. Preferably, the polymer is recycled and/or bio-based, which is advantageous for the overall environmental balance. In an embodiment, the polymer is a synthetic polymer, which can be advantageous for moulding. The matrix polymer can be thermoplastic or elastomeric. For example, the polymer can be a polyamide, polyolefin, such as polyethylene or polypropylene, polyester, polyurethane, silicone, acrylic polymer or rubber, or a copolymer or mixture thereof.

In a preferred embodiment, the polymer is thermoplastic. When thermoplastic polymers are used, the moulded part is obtained from a polymer melt, in which the biochar from the granules becomes dispersed. For example, the thermoplastic polymer can be polyolefin, polyamide, acrylonitrile butadiene styrene (ABS) or polylactide, or mixtures thereof. Preferably, the thermoplastic polymer is polyethylene, polypropylene or polyamide. It was found that the granules are highly compatible with such thermoplastic polymers, such that composite materials with high mechanical stability can be obtained.

In a preferred embodiment, the polymer is relatively hydrophobic. Since the granulate is compatible with hydrophobic polymers, such as polyolefins and polyamides, stable composites can be produced from such polymers which comprise high levels of biochar.

In a preferred embodiment, the matrix polymer is selected from polyethylene, polypropylene and polyamide. In a preferred embodiment, the polymer is polyolefin, such as polyethylene or polypropylene. In a highly preferred embodiment, the thermoplastic polymer is polyethylene. The polyethylene can be HDPE (high density polyethylene). It was found that highly stable composite materials can be obtained based on polyethylene. This is advantageous, because polyethylene is available in high amounts and at low costs, and can be recycled conveniently. Thus, respective materials are suitable for large scale building applications and permanent carbon storage.

In a preferred embodiment, the thermoplastic polymer is polyamide. Polyamides are characterized by repetitive amide bonds in the polymer chain. The polyamide can be aliphatic polyamide, polyphthalamide or aromatic polyamide. Preferably, the polyamide is aliphatic, such as PA6 or PA66. The inventive composite material can be especially advantageous for polyamide, because the moisture content of the binder polymer-impregnated biochar particles is relatively low. Therefore, undesirable hydrolysis of the polyamide can be avoided, and the composite material can remain stable over long time periods.

In a preferred embodiment, the matrix polymer is not curable. Thus, it does not comprise reactive groups, such as epoxy, vinyl, diene or silyl groups, or sulfur in any form; and/or other functional groups, which are crosslinked under the conditions when the granulate and composite material are prepared. Preferably, the polymer does not comprise reactive groups such as hydroxyl, carboxyl or amine groups, which are reacted when the granulate and composite material are prepared. According to the invention, stable composite materials can be obtained even when the polymer is not cured. This is advantageous, because systems with curable polymers are generally more expensive, more difficult to control, and also more difficult to recycle.

In another embodiment, the matrix polymer is a curable polymer, such as a rubber, and comprises reactive groups for curing, such as vinyl or epoxy groups. This can be advantageous, because the stability of the composite material can be further increased by curing the polymer matrix.

It is preferred that the matrix polymer is not hydrophilic, and especially that the polymer does not comprise hydrophilic functional groups, such as hydroxyl or carboxyl groups. Preferably, the matrix polymer is not a natural hydrophilic polymer, such as cellulose, protein, collagen or starch. Such hydrophilic matrix polymers are typically processed from aqueous solutions, and thus they cannot be moulded conveniently from thermoplastic melts.

According to the invention, it was found that the composite material can have high stability, even when high levels of biochar are included. Thus, the composite material is highly suitable for construction applications, which enable permanent and efficient carbon storage. Without being bound to theory, it is assumed that the binder polymer can advantageously promote the compatibility of matrix polymers and the biochar, thereby mediating intimate mixing.

Subject of the invention is also a composite material comprising a matrix polymer and biochar particles, which is obtainable by the inventive method.

Subject of the invention is also a shaped object comprising or consisting of the inventive composite material. The composite material can be provided in a desired shape. Preferably, the shaped object is a block, plate, brick, panel, rod, tube or pellet. The initial shape can be conferred to the object in moulding step (b). The shaped object can also comprise the composite material and another material. For example, the shaped object can then be a construction material with a protective coating, or an article with another functional material, such as sunglasses with a frame from the composite material and glasses from another material. Preferably, a large number of objects is produced which have the same shape, which are applicable for large scale applications. Preferably, the production process is continuous, which is advantageous for large scale applications.

Surprisingly, the composite material has different structure and advantageous properties compared to composites, which were produced simply from the same amounts of matrix polymer and biochar filler. The inventive composite materials, which comprises the binder polymer, was found to have higher mechanical and dimensional stability. Without being bound to theory, it is assumed that the binder polymer can support a more uniform distribution and more intimate contact of the biochar particles with the polymer matrix.

In a preferred embodiment, the composite material comprises 10 to 80 wt.% biochar. It is preferred that the ratio of biochar in the composite is at least 20 wt.% or at least 30 wt.%, more preferably at least 40 wt.% or at least 50 wt.%. The environmental footprint can be especially advantageous when high amounts of biochar are included. Preferably, the composite material comprises 20 to 90 wt.% matrix polymers. Surprisingly, it was found that the composite material can have high mechanical strength, even if high amounts of biochar filler are included into the polymer matrix.

Preferably, the composite material comprises
(A) 80 to 20 wt.%, preferably 30 to 70 wt.%, matrix polymer, and
(B) 20 to 80 wt.%, preferably 30 to 70 wt.%, of biochar, or granulate.

Preferably, the total amount of matrix polymer and biochar is at least 80 wt.%, more preferably at least 90 wt.% or at least 95 wt.% of the composite. The remainder is binder polymer, and optionally additives and/or impurities. The composite material may also comprise additives (c), for example up to 20 wt.%, or up to 10 wt.%. Preferably, the total amount of components (A), (B) and (C) is 100%. More preferably, the composite material comprises 40 to 80 wt.% biochar and 20 to 60 wt.% matrix polymer.

According to the invention, it is advantageous that the composite material and shaped objects can be obtained easily, uniformly and in large numbers by moulding. The shaped object has a defined three-dimensional form. Typically, the length in one direction is at least 5cm, more preferably at least 10 cm or at least 20 cm, and/or the weight is at least 50 g, preferably at least 100 g. For example, the shaped object can have a length between 5 cm and 2 m, and/or a weight between 50 g and 10 kg. After moulding, the form can be modified, for example by cutting or polishing.

In a preferred embodiment, the composite material is dense, and thus not porous. A dense material can be advantageous for storing high amounts of carbon per volume. Further, the stability and barrier properties can be higher. However, the biochar which is embedded in the polymer matrix comprises micropores. Without being bound to theory, it is assumed that in the granulate, the binder polymer can infiltrate the biochar micropores at least in part.

This is advantageous for stability of the granules and shaped part, because the bonding strength between the biochar and binder polymer is increased. Moreover, the density of the composite material can be increased, because the total void space is reduced. For example, it was found that the bulk density of the granules can be above 0.3 g/cm³, and even above 0.4 g/cm³, preferably in the range of 0.3 to 0.6 g/cm³, or of 0.4 to 0.45 g/cm³. In comparison, the bulk density of pure biochar, or biochar impregnated with other conventional binders, is significantly lower. The high density is advantageous, because the stability, barrier function and carbon footprint of the composite material can be improved.

In a preferred embodiment, the composite material comprises at least one additional filler or reinforcing agent, such as fibers, which is different from biochar. It is preferred that additional filler or reinforcing agent is also based on natural materials, and thus has a good environmental footprint. Additional fillers could be added for modifying the properties, for example by including colour pigments or conductive particles. Fibres, especially glass or carbon fibres, can be added for increasing and modifying mechanical stability. Preferably, the amount of additional fillers and/or reinforcing agents is less than 20 wt.%, preferably less than 10 wt.%, for example in the range of 1 to 20 wt.% or 2 to 10 wt.%.

The composite material and shaped object may comprise at least one functional additive, which is not a structural polymer, filler or reinforcing agent. For example, the additive can be selected from processing aids, such as lubricants, plasticizers, colorants, flame retardants, thermal stabilizers and compatibilizers. Lubricants can improve workability during compounding or moulding. For example, the processing aid can be a fatty acid salt, such as zinc or calcium stearate, which is for example available under the trademark Ligstar from Peter Greven, DE. Such additives can also confer desired properties to the composite material and shaped part, such as colour or stability. Preferably, the amount of additives is up to 5 wt.% or up to 2 wt.%, for example in the range of 0.01 to 5 wt.% or 0.1 to 2 wt.%.

Preferably, the composite material is rigid and stiff. Thus, the elasticity is low. Preferably, the tensile modulus is at least 4000 N/mm², more preferably at least 4500 N/mm², preferably between 4000 and 8000 N/mm², as determined according to ISO 527-1:2019. Composite materials having such high tensile modulus have high dimensional stability. They are suitable for application in which the materials shall not be deformed, such as construction applications.

Preferably, the composite material has high mechanical stability. Preferably, the tensile strength is >20 MPa, more preferably >22 MPa, or even >24 MPa, as determined according to ISO 527-1:2019. The high tensile strength is advantageous for construction applications, because the material can withstand mechanical stress and strain. Such composite materials are suitable for application in which the materials must be highly stable, such as construction applications.

Preferably, the composite material is used for construction applications. Subject of the invention is also a construction material, comprising the inventive composite material. Subject of the invention is also the use of the granulate of the invention for producing construction materials. Construction applications are especially applications in constructional engineering and architecture. They comprise building applications, but also infrastructure such as bridges or tunnels. Preferably, the construction material or shaped object is a panel, insulation board, building part or building block. In preferred embodiments, the building material is a panel for walls, an insulation board, a building part, or a block for assembling building parts, such as walls, or a structural part. A panel is a flat object for covering a building part, such as a wall, floor or furniture surface. The use as a panel is advantageous because of the high stability of the composite material. Since the composite material can be mechanically, thermally and chemically stable, the panel can shield the substrate to which it is mounted.

The shaped object may comprise the composite material and at least one further component or material. For example, it can be a laminate from two, three or more layers. In a preferred embodiment, the composite material comprises a coating. For example, a functional coating can confer a desired property to the composite material. The coating may confer colour and/or texture to the surface. The coating could be a protective coating, for example against moisture, UV radiation, mechanical damage or weathering. Since biochar confers a dark colour to the composite material, a coloured coating may be desired. Coatings can be applied by conventional means, such as liquid coating, for example with resins, impregnation, electron scattering (Trespa process), physical or chemical vapor deposition, lamination and the like. The coating may cover the composite material completely or partially, for example only on one surface.

Since the composite material of the present invention is moulded, it is different from randomly shape materials in the art, such as biochar grains or powders, which are used in the art for soil improvement, water cleaning, catalysis or filters.

In a preferred embodiment, the biochar inside the composite material is not accessible to the environment, except for the particles which are exposed to the surface. Thereby, the material is also distinguished from conventional biochar materials for soil improvement, water cleaning, catalysis or filters, which are designed for interaction of the biochar particles with the environment, and especially adsorption.

In a preferred embodiment, the angle of repose of the granulate is between 10° and 40°, preferably between 15° and 35°, as determined by DIN ISO 4324:1983-12. For example, the angle of repose can be adjusted by controlling the amount of solvent in the granulation process and granulate. This can be advantageous, because the flowability of the granulate is good and it can be handled conveniently.

In a preferred embodiment, the size distribution of the granules (d90 - d10) / d50 is between 0.2 and 4, preferably between 0.3 and 3, as determined by particle size analysis by laser diffraction according to ISO 13320:2020. This can be advantageous, because the granulate is relatively uniform and can be handled conveniently.

In an embodiment, the composite material and/or the granulate in step (a) do not comprise tannin and/or a reaction product thereof. In an embodiment, no tannin binder is used for preparing the granulate. In an embodiment, the binder polymer for preparing the composite material and/or the granulate in step (a) is not polyvinyl alcohol and/or a reaction product of hydroxy methyl furfural with bis(hexamethylene)triamine. It was found that the mechanical stability of the composite material prepared from granules with polyvinyl alcohol binder is relatively low.

Another embodiment is the inventive granulate, with the proviso that if the granulate comprises tannin, the angle of repose of the granulate is between 10° and 40°, preferably between 15° and 35°, as determined by DIN ISO 4324:1983-12. Another embodiment is the inventive granulate, with the proviso that if the granulate comprises tannin, the size distribution of the granules (d90 - d10) / d50 is between 0.2 and 4, preferably between 0.3 and 3, as determined by particle size analysis by laser diffraction according to ISO 13320:2020.

The inventive composite material, method and granulate solve the problem underlying the invention. A stable composite material is provided, which is suitable as a carbon sink for long-term storage of carbon from the atmosphere. The composite materials and shaped objects of the invention can have high mechanical and dimensional stability, even when comprising relatively high amounts of biochar. Further, a granulate is provided for convenient and efficient handling and production of shaped parts by moulding

### Literature

Briens and Bowdon-Green, "A comparison of liquid binders for drum granulation of biochar powder", 2020, Powder Tech. 367, 487-496
Das et al., "Incorporation of Biochar to Improve Mechanical, Thermal and Electrical Properties of Polymer Composites", 2021, Polymers 13(16), 2663.
Peng et al., "Waste Plastics as an Effective Binder for Biochar Pelletization", 2021, Energy Fuels 35, 17, 13840-13846
Pongdong et al., "Influence of Filler from a Renewable Resource and Silane Coupling Agent on the Properties of Epoxidized Natural Rubber Vulcanizates", 2015, J. Chem., Article ID 796459.
Yang et al., "Limited Role of Biochars in Nitrogen Fixation through Nitrate Adsorption", 2017, Science of the Total Environment 592, 758-765.
Zhang et al., "The Dynamic Mechanical Analysis of Highly Filled Rice Husk Biochar/High-Density Polyethylene Composites", 2017, Polymers 9(11), 628.

### Examples

### Example 1: Binder preparation

Aqueous binders were prepared as outlined in the following.

### Sodium silicate

A sodium silicate binder was prepared by diluting sodium silicate solution (dry weight content between 20 wt.% and 35 wt.%) with distilled water. Polyethylene glycol was added as a wetting agent to a final polyethylene glycol concentration of 0.5 wt.%.

### Polyvinyl alcohol binder

Polyvinyl alcohol was prepared by melting 10 wt.% PVA in distilled water at 90°C for 30 mins. The obtained liquid PVA binder is cooled to room temperature.

### Tannin binder

Tannic acid was mixed in distilled water at about 35 - 50 wt.%. The pH value was adjusted to 11 to 12 by addition of NaOH and hexamine solution was added (6 -10 % dry weight of hexamine to dry weight of tannins).

### Hydroxy methyl furfural

Fructose and water as a solvent were added to a three-neck flask, equipped with a thermo-element and a reflux condenser. The dissolved carbohydrate feedstock was heated to 60 °C. Heating and stirring was carried out with a hot-plate magnetic stirrer. The first half of the bis(hexamethylene)triamine was added at 60 _{°}C and left to react for 20 min. The solution was cooled to room temperature. The second portion of the bis(hexamethylene)triamine was added directly before the analysis. The target solid content after the second addition of bis(hexamethylene)triamine was 55 wt.-%.

### CMC (carboxymethyl cellulose)

CMC solution is used without any modification. CMC is a cellulose derivative formed by the reaction of alkali and chloroacetic acid.

### Lignosulfonates

Calcium lignosulfonate, sodium lignosulfonate and ammonium lignosulfonate (supplier: Borregaard, NO) having a solid content of 50% were used without further modification.

### Kraft lignin

Kraft lignin was dissolved in 3M NaOH with 50% solid content.

### Polyfurfuryl alcohol (PFA)

Furfuryl alcohol is mixed with maleic anhydride (2% by weight) at ambient temperature until dissolved. The mixture is then heated up to 100°C in a beaker submerged in an oil bath. Temperature is maintained for about 90 minutes under constant and vigorous stirring. The resulting polyfurfuryl alcohol is used for granulation.

### Tannin and furfuryl alcohol

10 g of tannin and 40 g of furfuryl alcohol were mixed well with a magnetic stirrer for 2 hours. Then p-toluenesulfonic acid (pTSA) as a 65% water solution was added as a catalyst under magnetic stirring for 2 min.

### Example 2: Wet granulation

Biochar powder from beech wood was sieved to obtain particle size distribution of <63 µm. The sieved fines are further dried in an oven to reach moisture content ≤ 6%. Granulates were prepared from the biochar powder and aqueous binders of example 1. The biochar was mixed with the binder at room temperature in a flask with overhead stirrer. The rotational speed of the stirrer could be altered between 0 - 500 rpm. Production of the biochar granules for each batch was repeated twice. Biochar fines (50 g) were placed in a flask under stirring at the desired rotational speed for 30 secs to pre-mix, before a certain amount of binder was added manually using a pressure sprayer. For each experiment, the liquid binder was pre-weighed to achieve a targeted liquid binder to biochar ratio. The biochar/binder ratios are summarized in table 1. After the specific agglomeration time, the granules were quickly removed from the flask and dried in an oven at given temperature. After drying, the granules were collected for further analysis and for compounding with HDPE. The conditions for wet granulation are:

| Rotational speed | Drying temperature | Drying time | Pre-mix time | Agglomeration time |
|---|---|---|---|---|
| 70 rpm | 80-100°C | 30-60 min | 1 min | 2-3 min |

### Examples 3 to 17: Preparation of composite materials

The granules produced according to example 2 were compounded with high density polyethylene (HDPE, SHC7260^{™}, Braskem, DE) at a 50 : 50 weight ratio, with the addition of 0.6 % zinc stearate as lubricant (Ligstar, DE) in a kneader (Brabender PL 2100^{™}). In this step, further curing of curable binders can take place. Initially, 24 g HDPE and 0.28 g lubricant were fed into the kneader and mixed for 4 min to ensure even melting of the polymer. Subsequently, 24 g of the biochar granulate was introduced into the kneader and mixed for 6 min to ensure homogenous blending and provide optimum time for the curable binders to undergo additional curing. The polymer could be mixed and compounded with the granules without substantial dusting. The obtained compound was shredded into small pellets and pressed into a 100 x 100 mm sample using a heat press.

### Conditions for compounding:

| Torque speed | Time | Temperature | Material amount |
|---|---|---|---|
| 60 rpm | 10 min | 170°C | 48,28 g |

### Process parameters for moulding:

| Pre-heating temp. | Press temp. | Pressing pressure | Pressing time |
|---|---|---|---|
| 110°C | 150°C | 250 KN | 3 min |

Once the compounded material was pressed, samples were cut into the required sample dimensions according to standard ISO 527 for further characterization.

In comparative example 3, a composite material was prepared by the same method with a corresponding amount of biochar powder instead of granulate. In comparative examples 15 to 17, the composite materials were prepared not with granulates, but with corresponding amounts of biochar and binder polymer, which were mixed directly with the HOPE and compounded.

### Characterization of composite material and granulate

Properties of the composite material and granulates of examples 1 to 17 as described above were examined. The properties and tests are outlined in the following. The results and conditions are summarized in table 1 below.

### Tensile strength and Tensile modulus:

Tensile test specimens of the composite material were cut out of the pressed sample using a CNC machine. The tensile samples were then examined with a tensile tester (Galdabini Quasar 25^{™}) according to ISO 527-1:2019.

### Moisture uptake:

The moisture absorption behaviour of the granulate was explored in a constant temperature and humidity chamber. At the beginning of the testing process, the granulate was dried in the oven at 80 °C, and then put into the testing chamber at 23°C temperature and a constant relative humidity of 60%. The mass of the granulate was measured after 72 hours.

### Bulk density of granulate:

For the determination of bulk density (ρb), the biochar granulate was filled into a 250 ml cylinder, and then a value for ρb was calculated from the measured mass (Wg, g) divided by volume. The bulk density of each parameter studied was measured twice.

### Thermal stability:

The thermal stability of the composite material was investigated using a thermogravimetric analyser (TGA, Mettler Toledo TGA 2^{™}). The compounds were broken into small pieces and a small unitary mono-block (approximately 10 mg) was analysed for each binder type. The degradation tests were carried out at atmospheric pressure with a nitrogen flow rate of 50 ml/min and the temperature was regulated as follows: continuous heating up to 800°C at 10°C/min.

### Dustiness and Flowability of granulates

The percentage of dustiness was assessed through visual inspection, with reference to raw biochar powder known to be 100% dusty with 0% reduction. Flowability was assessed qualitatively by visual inspection while pouring the granulated biochar from a beaker, and compared to reference biochar powder. The granule size was determined by optical microscopy.

### Discussion of results

It was found that use of the inventive granulate can prevent dusting. Dosage and handling of the inventive granulate are also more convenient, as indicated by the improved flowability. The granulates can be highly uniform, as indicated by the high ratio of granules between 1 and 4 mm. Thus, the inventive method is advantageous compared to conventional methods, in which biochar powder as such is mixed with matrix polymers.

Moreover, the results show that the composite materials of the invention have advantageous properties, although they comprise a high ratio of 50 wt.% biochar granulate. The inventive materials from granules with a polymer binder are characterized by a combination of high mechanical and dimensional stability. They have high tensile strength, which is an indicator of mechanical stability, and high tensile modulus, which is an indicator of stiffness and dimensional stability. The tensile modulus is significantly higher than for the comparative composite prepared without binder (example 3).

It is a further advantage that the bulk density of the granules is higher than for the comparative material without binder (example 3). It is assumed that the biochar pores can be infiltrated and filled at least partially with the binder polymer.

It is a further advantage that the inventive granulates can have a low water uptake, especially in examples 7 to 9 and 11 to 13. Thus, the granulates can be stored and handled conveniently, without undesirable changes of properties by water accumulation.

The composite product of example 13 is especially advantageous, because the granules have low water content and the product has high mechanical and dimensional stability.

The comparative product of example 4 from granules with inorganic binder has a relatively high water uptake and limited mechanical stability. Composite materials from comparative examples 15 to 17, which comprise the same amounts of biochar and binder polymer, but were not prepared from granulates, have significantly lower mechanical stability. This shows that it is the granulate, and not simply the binder polymer, which provides the advantageous effects.

### Example 18 - Visual analysis of microstructure

The microstructure was examined by optical microscopy of samples prepared after soaking with selected binders. It was found that the varying levels of impregnation corresponded roughly to the mechanical performance of the composite. For example, it was found that samples prepared with tannic acid show a greater level of penetration into the macroscopic pores of the biochar then samples prepared with sodium silicate. Also the samples prepared with polyfurfuryl alcohol showed high levels of penetration, which could explain the high values for tensile strength as a thermoplastic composite.

### Conclusion

A dense and stable composite material is provided, which can store high amounts of carbon, and which can be advantageously used for construction applications. The inventive composite materials can be prepared conveniently from biochar granulates by the inventive method.

**Table 1: Characterization of composite materials and granulates of examples 3 to 17 prepared with different binders. Examples 3, 4 and 15 to 17 are comparative. n.d. = not determined**

| Ex. | binder | binder | granule | granule | granule | granule | granule | granule | composite | composite | composite |
|---|---|---|---|---|---|---|---|---|---|---|---|
| | | conc. * | bulk density | moisture content | moisture uptake 72h, 23°C, 65% RH | ratio 1 to 4 mm | flowability | reduction in dustiness | residue after heating to 800°C | tensile strength | tensile modulus |
| | | [%] | [g/cm³] | [%] | [%] | wt.[%] | | [%] | [%] | [N/mm²] | [N/mm²] |
| 3 | - | 0 | 0.26 | 4.55 | 4.93 | 0 | low | 0 | 46.5 | 21.5 | 3058 |
| 4 | sodium silicate | 7 | 0.31 | 4.25 | 8.46 | 75 | medium | 85 | 44.6 | 20.2 | 4115 |
| 5 | polyvinyl alcohol | 2 | 0.32 | 2.88 | 9.95 | 70 | medium | 80 | 47.1 | 13.5 | 4030 |
| 6 | tannic acid | 8 | 0.41 | 6.85 | 4.45 | n.d. | n.d. | n.d. | 56.1 | 25.2 | 6028 |
| 7 | hydroxy methyl furfural | 10 | 0.36 | 6.77 | 10.86 | 80 | medium | 85 | 36.8 | 20.9 | 4451 |
| 8 | CMC | 2.5 | 0.32 | 2.4 | 2.83 | 95 | high | 95 | 43.2 | 20.32 | 4247.6 |
| 9 | calcium lignosulfonate | 10 | 0.36 | 2.45 | 1.56 | 85 | high | 90 | 40.2 | 20.2 | 4703.4 |
| 10 | sodium lignosulfonate | 10 | 0.38 | 3.51 | 7.5 | 85 | medium | 80 | 40.2 | 20.53 | 4829.8 |
| 11 | ammonium lignosulfonate | 10 | 0.34 | 3.78 | 1.57 | 90 | high | 90 | 41.8 | 22.48 | 4265.7 |
| 12 | Kraft lignin | 10 | 0.38 | 4.03 | 5.46 | 80 | medium | 80 | 43.4 | 20.4 | 4162.2 |
| 13 | polyfurfural alcohol | 8 | 0.38 | 2.66 | 0.68 | 95 | high | 95 | 48.7 | 24.2 | 4897.5 |
| 14 | tannic acid +furfuryl alcohol | 10 | 0.43 | 6.72 | 1.75 | | n.d. | n.d. | 40.8 | 21.7 | 4387 |
| 15 | calcium lignosulfonate | 10 | - | >10 | - | - | low | 30 | 42.0 | 13.9 | 2591 |
| 16 | sodium lignosulfonate | 10 | - | >10 | - | - | low | 40 | 43.3 | 12.5 | 2738 |
| 17 | ammonium lignosulfonate | 10 | - | >10 | - | - | low | 50 | 39.9 | 12.6 | 2530 |

| | | | | | | | | | | | |
|---|---|---|---|---|---|---|---|---|---|---|---|
| * concentration of binder suspension/solution which is combined with biochar powder for preparing the granules | | | | | | | | | | | |

## Claims

1. A method for preparing a composite material, comprising the steps of
(a) providing a composition which comprises a matrix polymer and a granulate which was obtained by wet granulation from biochar particles and at least one binder polymer,
(b) moulding the composition, and
(c) consolidating the moulded composition.

2. The method of claim 1, wherein the binder polymer is from natural origin.

3. The method of at least one of the preceding claims, wherein the binder polymer comprises aryl groups.

4. The method of claim 3, wherein the binder polymer is selected from polyfurfuryl alcohol and lignin.

5. The method of at least one of the preceding claims, wherein the binder polymer is cured in step (c).

6. The method of at least one of the preceding claims, wherein the binder polymer is not crosslinked with a crosslinker in steps (a) to (c).

7. The method of at least one of the preceding claims, wherein the biochar has an average particle size of 1 µm to 500 µm.

8. The method of at least one of the preceding claims, wherein the granulate comprises, based on the total amount of solids,
(i) 60 to 99 wt.% biochar, and
(ii) 1 to 40 wt.% binder polymer.

9. The method according to at least one of the preceding claims, wherein the matrix polymer is thermoplastic.

10. The method according to claim 9, wherein the matrix polymer is selected from polyethylene, polypropylene and polyamide.

11. A composite material comprising a matrix polymer and biochar particles, which is obtainable by a method of at least one of claims 1 to 10.

12. The composite material of claim 11, which comprises
(A) 20 to 80 wt.% matrix polymer, and
(B) 20 to 80 wt.% biochar.

13. A shaped object comprising or consisting of the composite material of at least one of claims 11 to 12.

14. A granulate, which is obtainable by wet granulation of an aqueous composition comprising biochar powder and a binder polymer comprising aryl groups.

15. A method for preparing a granulate of claim 14, comprising the steps of
(i.) providing an aqueous composition comprising biochar particles and a binder polymer comprising aryl groups,
(ii.) wet granulating the composition, and
(iii.) drying the granulate.
